# EUROPEAN PATENT APPLICATION

(11) **EP 4 186 856 A1**
(43) Date of publication of application: **31.05.2023**
(21) Application number: 22206263.0
(22) Date of filing: 08.11.2022
(51) Int. Cl.: C01B 21/068, C04B 35/565, F16C 33/32

(54) **PRODUCTION OF SILICON NITRIDE BALLS**

(30) Priority: 25.11.2021 KR 20210164152
(71) Applicant: Cheomdanlab Inc., Gwangju 61012 (KR)
(72) Inventor: JUNG, Kyoung Sun, 31078 Seobuk-gu, Cheonan-si, Chungcheongnam-do (KR); SEO, In Ha, 61092 Buk-gu, Gwangju (KR); LEE, Byeong Hoon, 61268 Buk-gu, Gwangju (KR); JANG, Ha Jun, 62307 Gwangsan-gu, Gwangju (KR); LEE, Yeol Ho, 62279 Gwangsan-gu, Gwangju (KR); OH, Byeong Yun, 61032 Buk-gu, Gwangju (KR); KIM, Su Won, 51240 Gimhae-si, Gyeongsangnam-do (KR); KIM, Tae Jun, 61424 Dong-gu, Gwangju (KR)
(74) Representative: Beck & Rössig European Patent Attorneys

(57) **Abstract**

Proposed are a high-toughness, high-strength silicon nitride ball and a method of manufacturing same. The method can significantly improve the yield of silicon nitride balls with high toughness and strength by controlling reaction with carbon during sintering.

## Description

### CROSS REFERENCE TO RELATED APPLICATION

The present application claims priority to Korean Patent Application No. 10-2021-0164152, filed November 25, 2021, the entire contents of which is incorporated herein for all purposes by this reference.

### BACKGROUND OF THE INVENTION

### 1. Field of the Invention

The present disclosure relates to a high-toughness, high-strength silicon nitride ball and a method of manufacturing same. More particularly, the present disclosure relates to a method of manufacturing high-toughness, high-strength silicon nitride balls, the method being capable of significantly improving the yield of silicon nitride balls and of controlling reaction with carbon during sintering, thereby producing high-toughness, high-strength silicon nitride balls.

### 2. Description of the Related Art

Ceramics are used for various mechanical parts due to their low density and thermal expansion rate and their high hardness and heat resistance.

Because of these properties, ceramics are widely used as the material of bearing balls used in extreme conditions.

Currently, bearing balls for use in acid or alkaline conditions are mostly based on ZrO₂ or Si₃N₄, and bearing balls for use in high-temperature, high-speed operation conditions are mainly based on Si₃N₄ or Al₂O₃.

As the sintering temperature is increased, three-phase transformation of crystal structure occurs (monoclinic to tetragonal to cubic). During cooling after sintering, cubic-to-monoclinic phase transformation occurs. In this case, sintering ZrO₂ alone is not preferable because the specimen breaks due to the about 4% volumetric expansion thereof.

Therefore, to improve sinterability, ZrO₂ is used along with a stabilizer selected from among Y₂O₃, CeO₂, and MgO. Here, when ZrO₂ is sintered along with Y₂O₃, the resulting material has good mechanical properties but poor corrosion resistance. Therefore, the material is mainly applied to wear-resistant articles such as cutters. When ZrO₂ is sintered along with CeO₂ or MgO, the resulting material has good corrosion resistance but poor mechanical properties due to excessive grain growth. Al₂O₃ is an economical material with high hardness and good corrosion resistance. However, it is difficult to use this material for bearing balls because the material is inferior in strength and wear resistance to other ceramic materials such as Si₃N₄ and ZrO₂.

### SUMMARY OF THE INVENTION

The present disclosure has been made to solve the problems occurring in the related art, and an objective of the present disclosure is to provide a method of manufacturing silicon nitride balls, the method being capable of producing high-toughness, high-strength silicon nitride balls that can be used as baring balls.

In addition, another objective of the present disclosure is to provide a high-yield manufacturing method for silicon nitride balls.

In order to accomplish the above objectives, the present disclosure provides a method of manufacturing silicon nitride balls, the method including: preparing a silicon powder; adding a solvent and an organic binder to the silicon powder to form a slurry; thermally spray drying the slurry to produce granules having a predetermined particle size; press-forming the granules to produce silicon balls; placing the silicon balls in respective holes of a soft porous foam; placing the porous foam in which the silicon balls are placed in a plastic bag and vacuum evacuating the porous foam in which the silicon balls are placed to pack the silicon balls; pacing the plastic bag in an isostatic press to form isostatic pressing molded silicon balls; degreasing the isostatic pressing molded silicon balls after obtaining the isostatic pressing molded silicon balls; and sintering and nitrating the degreased silicon balls to produce silicon nitride balls.

In a preferred embodiment, the porous foam may be a PE foam, each hole in the porous foam may be circular or polygonal and may extend from an upper end to a lower end of the porous foam, and the width of the broadest portion of each hole may be larger than the diameter of the silicon ball placed in the hole.

In a preferred embodiment, the porous foam may be a PE foam, each pore in the porous foam may be circular or polygonal and may be open only at an upper end of the porous foam, and the silicon balls may be placed in the respective holes of the porous foam.

In a preferred embodiment, the method may further include, prior to the degreasing, coating an outer surface of each of the isostatic pressing molded silicon balls with boron nitride, thereby preventing the silicon balls from reacting with carbon in a furnace during the degreasing and sintering.

In a preferred embodiment, when the outer surface of each of the hydrostatic pressure molded silicon balls is coated with the boron nitride, wet coating may be performed with a boron nitride slurry.

The present disclosure has the advantages described below.

In the method of manufacturing silicon nitride balls, multiple silicon balls are mounted on a porous foam, packed, and subjected to isostatic pressing for molding. Therefore, this silicon nitride ball manufacturing method has an advantage of greatly improving the yield.

In addition, the method of manufacturing silicon nitride balls, according to the present disclosure, has an advantage of coating the outer surface of an isostatic pressing molded silicon ball with boron nitride so that reaction with carbon during degassing and sintering can be controlled. Therefore, it is possible to produce silicon nitride balls with high toughness and high strength.

### BRIEF DESCRIPTION OF THE DRAWINGS

FIG. 1 is a flowchart of a silicon nitride ball manufacturing method according to one embodiment of the present disclosure;
FIG. 2 is a diagram illustrating an example of a porous foam used in an isostatic pressing molding method according to one embodiment of the present disclosure;
FIG. 3 is a view illustrating an isostatic pressuring molded silicon ball produced by a silicon nitride ball manufacturing method according to one embodiment of the present disclosure; and
FIG. 4 is a view illustrating a silicon ball coated with boron nitride in a silicon nitride ball manufacturing method according to one embodiment of the present disclosure.

### DESCRIPTION OF THE PREFERRED EMBODIMENTS

As the terms used to describe the present disclosure in the present disclosure, as many general terms as possible are selected. However, in certain cases, terms that are chosen by the inventors of the present disclosure may be used. In such cases, the meanings of the terms should be understood not simply by the name but by the detailed description of the invention.

Hereinafter, the technical aspects of the present disclosure will be described in detail with reference to the preferred embodiments illustrated in the accompanying drawings.

However, the present disclosure is not limited to the embodiments described herein and may be embodied in other forms. Like reference numerals refer to like elements throughout the description herein and the drawings.

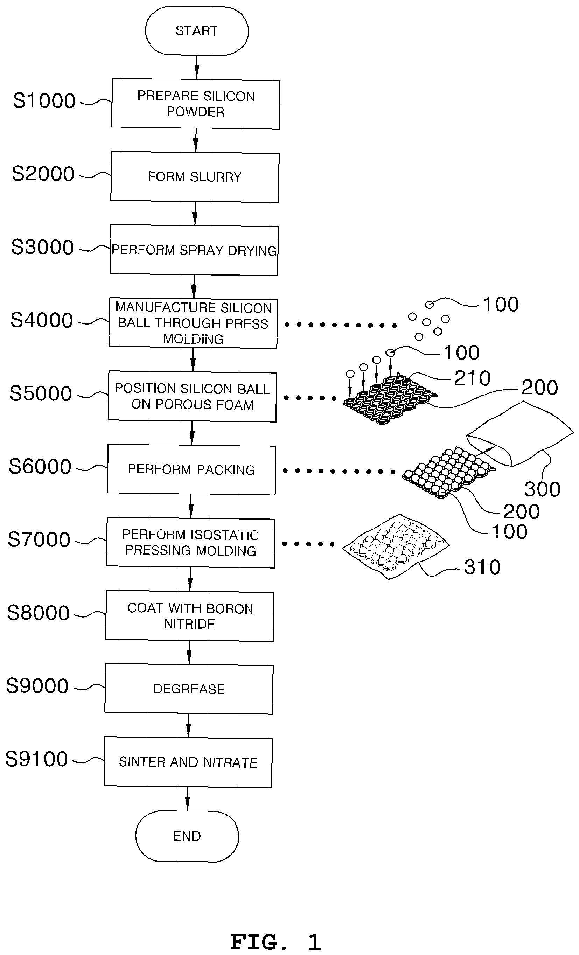

FIG. 1 is a flowchart of a silicon nitride ball manufacturing method according to one embodiment of the present disclosure.

Referring to FIG. 1, according to one embodiment of the present disclosure, a method of manufacturing a silicon ball with high toughness and high strength is a method of manufacturing a silicon nitride ball to be inserted into a machining part such as bearing or the like to reduce contact friction.

First, in step S1000, a silicon powder is prepared.

The silicon powder is prepared by pulverizing metal silicon scrap such that impurities and the grain size of the silicon powder are controlled.

The smaller the grain size of the silicon powder, the more preferred. A silicon powder having an average particle size in a range of 1 µm to 10 µm may be used for mixing with a sintering additive and for final densification.

Next, a solvent and an organic binder are added to the silicon powder to form a slurry in step S2000.

There is no particular restriction on the type of solvent or organic binder. Preferably, the solvent may be one or more selected from among ethanol, methanol, isopropanol, distilled water, and acetone. Preferably, the organic binder may be a polyvinylbutyral (PVB)-based binder.

Next, granules having a predetermined particle size are prepared by spray drying the slurry in step S3000.

In order for the granules obtained by the spray drying not to be doughnut-shaped granules or not to have empty cavity therein, the internal and external temperatures of a chamber used in the process may be maintained at 120°C and 90°C, respectively. In this case, the speed of an atomizer may be set to be in a range of 8,000 rpm to 15,000 rpm.

The granules thus prepared may have an average particle size in a range of 60 µm to 120 µm. Preferably, the granules may have an average particle size in a range of 80 µm to 120 µm.

The granules then undergo pressing molding, so that silicon balls 100 are produced in step S4000.

When the pressing molding is performed under isostatic conditions, the molding pressure is preferably set to be in a range of 20 kg/cm³ to 50 kg/cm³ for application of uniform pressure and for ease of handling after the molding.

Next, the silicon balls 100 are placed in respective holes 210 of a soft, porous foam 200 in step S5000.

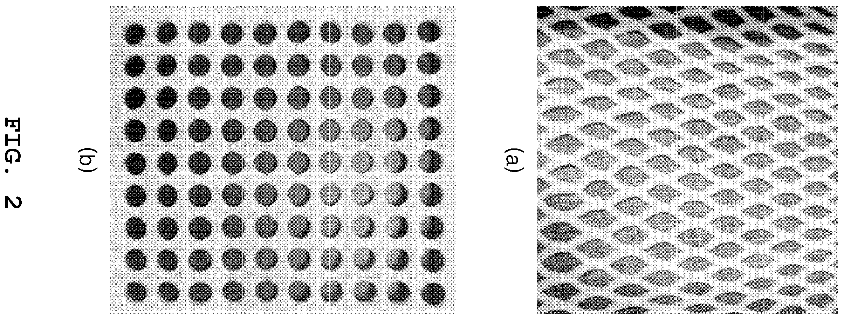

The porous foam 200 may be a PE foam having multiple holes 210 spaced from each other. The holes 210 may be circular in shape as illustrated in FIG. 2B or polygonal in shape as illustrated in FIG. 2A.

The holes 210 may be through holes extending from the top to the bottom of the porous foam 200. The holes 210 may be blind holes that are open at the top of the porous foam 200 and are closed at the bottom of the porous foam 200.

The largest width of the widths of each hole 210 must be larger than the diameter of the silicon ball 100 placed in the hole.

This is to prevent the silicon ball 100 from passing through the hole 100 and to minimize the contact with the PE foam.

In this case, the holes have to be controlled such that each hole 210 is occupied by only one silicon ball 100.

That is, the porous foam 200 serves as a jig capable of holding multiple silicon balls.

To position the silicon balls 100 in the respective holes 210 of the porous foam 200, multiple silicon balls 100 are placed on the porous foam 200, and a vibrator moves the silicon balls 100 from side to side so that the silicon balls 100 enter the respective holes 210.

The thickness of the porous foam 200 must be smaller than the diameter of the silicon balls 100. Preferably, the thickness may have a value within a range of 20% and 50% of the diameter of the silicon balls 100.

Next, the porous foam 200 with the silicon balls 100 thereon is placed in a plastic bag 300, and the plastic bag 300 is vacuum evacuated for packing in step S6000.

In addition, the plastic bag 300 may be made of any material or may have any form, provided that the plastic bag 300 can withstand the pressure applied during an isostatic pressure molding process described below.

On the other hand, the applicant of the present application has proposed a technique of inserting one silicon ball into a rubber bag, sealing the rubber bag, and performing isostatic pressing molding. This technique has a low yield. In the present disclosure, the applicant proposes a method of dramatically increasing the yield by packing a plurality of silicon balls using the porous foam 200 and then performing isostatic pressing molding.

Next, the packed plastic bag 310 is put into an isostatic press, and isostatic pressing molding is performed in step S7000.

It is preferable that the application pressure during the isostatic pressing molding is maintained in a range of 200 atm to 400 atm and the application time is set to be in a range of 30 to 60 minutes.

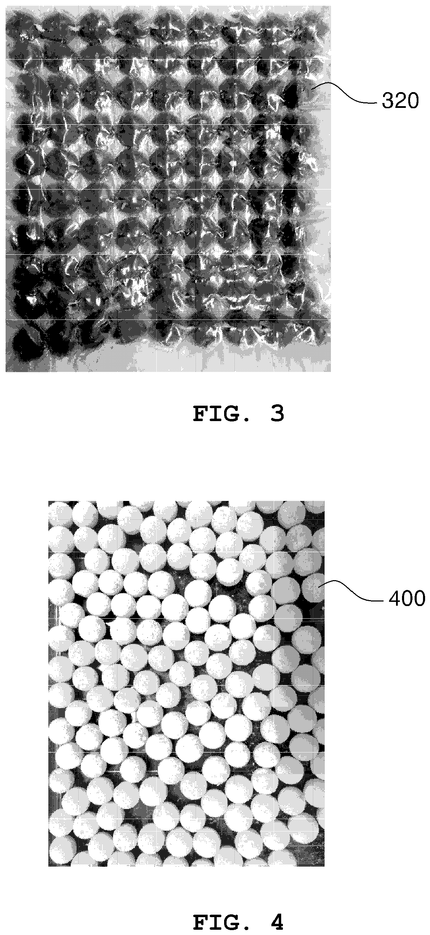

Next, as illustrated in FIG. 3, the isostatic pressing molded silicon balls 320 are removed from the plastic bag, and then the balls 320 are degreased (step S9000) and sintered (step S9100). Thus, silicon nitride balls with high toughness and high strength are produced.

The degreasing is a process of removing organic matter contained in silicon powder without oxidizing the silicon powder. In the process, the temperature is increased at a rate of 0.11°C/min to 1°C/min until reaching 450°C, and the elevated temperature is maintained for 2 to 10 hours in an oxidation atmosphere. The residual carbon, which has not been completely removed, undergoes degreasing for 1 to 10 hours at 900°C in a nitrogen atmosphere.

The sintering is a gas pressure sintering (GPS) process for nitriding silicon balls. In the sintering process, the temperature is increased at a rise rate of 0.1°C/min to 2°C/min until reaching 1400°C, and then the elevated temperature and a nitrogen pressure of 1.0 to 1.8 atm are maintained for a retention time of 0.5 to 10 hours. At the final stage of the sintering, the temperature is increased at a rise rate of 1°C/min to 5°C/min until reaching 1900°C and the nitrogen pressure is maintained at 9 atm for a retention time of 1 to 10 hours.

After the isostatic pressing molding is performed, a process of coating the silicon balls with boron nitride (step S8000) may be performed before the degreasing process.

FIG. 4 illustrates a state in which the silicon ball is coated with boron nitride.

The boron nitride is prepared as a slurry by adding a solvent to a boron nitride powder, and then the boron nitride slurry is applied on the silicon nitride ball through a wet coating method.

It is preferable to use water as the solvent.

The reason for using water as the solvent is that when since an organic binder such as a polyvinylbutyral (PVB)-based binder is used for spray drying, when an organic solvent instead of water is used as the solvent, the PVB-based binder on the surface of the silicon ball melts and reacts with boron nitride. This hinders densification during the sintering.

When the water content in the slurry is in the range of 50% to 98% by weight with respect to the boron nitride powder, that is, the weight ratio is lower than required, the viscosity of the slurry increases and the thickness of the coating becomes excessively large. In this case, since the thermal conductivity is low, the crystal structure differs between a surface region and a deeper region, resulting in deterioration in strength of the balls.

When the thickness of the boron nitride coating is in a range of 5 µm to 20 pm, reaction at the contact surface between the silicon balls during the sintering may be inhibited, and grain growth toward the surface can be controlled.

Next, after the silicon balls coated with the boron nitride slurry are dried, the degassing process (step S9000) is performed, and the sintering process (step S9100) is then performed to produce the high-toughness, high-strength silicon nitride balls.

In addition, it is preferred that the moisture content of the dried silicon balls is 5% or lower. Moisture generated during the high-pressure gas pressure sintering may induce oxidation of graphite-based heating elements installed in the equipment or graphite-based parts installed in the chamber, resulting in production of carbon monoxide or carbon dioxide through the oxidation, which may cause damage to the equipment and products.

When degreasing and sintering the silicon balls coated with boron nitride, if reaction between the balls and carbon is not inhibited, carbon penetrates into the silicon balls to form silicon carbide. This inhibits production of silicon nitride balls with high toughness and high strength. Therefore, it is important to control the carbon to prevent the formation of silicon carbide.

Although the present invention has been described with reference to the preferred example, the ordinarily skilled in the art will appreciate that the present invention is not limited to the example described above and can be diversely changed and modified without departing from the scope of the spirit of the present invention.

## Claims

1. A method of manufacturing silicon nitride balls, the method comprising:
preparing a silicon powder;
adding a solvent and an organic binder to the silicon powder to prepare a slurry;
spray-drying the slurry to produce granules having a predetermined particle size;
press-molding the granules to produce silicon balls;
positioning the silicon balls in respective holes of a soft, porous foam;
packing the porous foam with the silicon balls by placing the porous foam with the silicon balls in a plastic bag and vacuum- evacuating the plastic bag;
placing the plastic bag into an isostatic press and performing isostatic pressing;
collecting and degreasing the isostatic pressing molded silicon balls; and
nitriding and sintering the degreased silicon balls to produce silicon nitride balls.

2. The method according to claim 1, wherein the porous foam is a PE foam, each of the holes in the porous foam is circular or polygonal and extends through the PE foam an upper end to a lower end of the PE foam, and each of the holes is formed such that the largest width of the widths thereof is larger than the diameter of the silicon ball positioned in the hole.

3. The method according to claim 1, wherein the porous foam is a PE foam, each of the holes of the PE foam is circular or polygonal and is a blind hole that is open only at an upper end of the PE foam, and the silicon balls are seated in the respective holes of the PE foam.

4. The method according to any one of claims 1 to 3, further comprising, prior to the degreasing, coating an outer surface of each of the isostatic pressing molded silicon balls with boron nitride, thereby preventing the silicon balls from reacting with carbon in a furnace during the degreasing and the sintering.

5. The method of claim 4, wherein the boron nitride is applied, as a slurry, on the outer surface of each isostatic pressing molded silicon ball through wet coating.
